(19) **Europäisches Patentamt / European Patent Office / Office européen des brevets**

(11) **EP 2 149 780 A2**

(12) **EUROPÄISCHE PATENTANMELDUNG**

(43) Veröffentlichungstag:
**03.02.2010 Patentblatt 2010/05**

(51) Int Cl.:
***G01B 11/25*** (2006.01)

(21) Anmeldenummer: **09167045.5**

(22) Anmeldetag: **03.08.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **01.08.2008 DE 102008040949**

(71) Anmelder: **Sirona Dental Systems GmbH**
**64625 Bensheim (DE)**

(72) Erfinder: **Faulstich, Andreas**
**68526 Ladenburg (DE)**

(74) Vertreter: **Sommer, Peter**
**Sommer**
**Patentanwalt und**
**European Patent and Trademark Attorney**
**Augustaanlage 32**
**68165 Mannheim (DE)**

(54) **Optisches Projektionsgitter, Messkamera mit optischem Projektionsgitter und Verfahren zur Erzeugung eines optischen Projektionsgitters**

(57) Die Erfindung betrifft ein optisches Projektionsgitter (1) zur Erzeugung einer Lichtverteilung, wobei das Projektionsgitter (1) eine Transmissionsverteilung aufweist, wobei die Transmissionsverteilung durch Teilbereiche (2a,2b,...2i), die lichtdurchlässige Strukturen (5) und lichtundurchlässige Strukturen (4) enthalten, gebildet ist. Innerhalb eines Teilbereichs (2a,2b,2c,2d,2e,2f, 2g,2h,2i) sind mehrere Strukturen jeder Art verteilt, insbesondere im wesentlichen unzusammenhängend und einander abwechselnd, wobei das Verhältnis von lichtdurchlässigen Strukturen (5) zu lichtundurchlässigen Strukturen (4) innerhalb eines Teilbereichs (2a,2b,...2i) so gewählt ist, dass ein dem Teilbereich (2a,2b,...2i) zugeordneter Transmissionswert $(T_a, T_b,...T_i)$ zumindest in einem statistischen Mittel erreicht wird. Die Erfindung betrifft auch eine Messkamera mit einem optischen Projektionsgitter und ein Verfahren zur Erzeugung eines optischen Projektionsgitters.

Fig. 1A

EP 2 149 780 A2

**Beschreibung**

Technisches Gebiet

Die Erfindung betrifft ein optisches Projektionsgitter zur Erzeugung einer Lichtverteilung, wobei das Projektionsgitter eine vorgegebene Transmissionsverteilung aufweist. Die Erfindung betrifft weiterhin eine Messkamera mit einem derartigen Projektionsgitter und ein Verfahren zum Erzeugen eines derartigen Projektionsgitters.

Stand der Technik

Aus dem Stand der Technik sind optische Projektionsgitter bekannt, die zur dreidimensionalen Vermessung von Objekten verwendet werden können.

Die DE 44 36 500 A1 offenbart ein optisches Projektionsgitter mit binärer optischer Dichteverteilung, das mit zum projizierten Streifenverlauf senkrechten Gitterstreifen, deren Streifenbreite sich entlang ihrer Längsrichtung periodisch und zu den Nachbarstreifen phasengleich ändert, aufweist.

Des Weiteren sind Projektionsgitter bekannt, die eine vorgegebene Lichtverteilung erzeugen sollen. Zur dreidimensionalen Vermessung von Objekten bieten sich hierfür insbesondere Lichtverteilungen an, die ein streifenförmiges Muster auf dem zu vermessenden Objekt erzeugen. Die Lichtverteilung bildet dazu bevorzugt einen sinusförmigen Helligkeitsverlauf nach. Je nach Positionierung des Gitters im Strahlengang ist die Transmissionsverteilung ebenfalls sinusförmig.

Da es große Schwierigkeiten bereitet, eine derartige Transmissionsverteilung auf einem Projektionsgitter mit echten Graustufen nachzubilden, wird gemäß dem Stand der Technik häufig eine Nachbildung der gewünschten Transmissionsverteilung mit unterschiedlich breiten, vollständig lichtdurchlässigen und vollständig lichtundurchlässigen Streifen verwendet.

Bei optischen Projektionsgittern der vorgenannten Bauweise besteht das Problem, dass die sich regelmäßig wiederholenden Transmissionsverteilungen Beugungsmuster verursachen, die zusammen mit der diskontinuierlichen Nachbildung der vorgegebenen Verteilung zu merklichen Abweichungen zwischen der vorgegebenen Lichtverteilung und der tatsächlich erzielten Lichtverteilung führen. Diese Abweichungen können die Genauigkeit von 3D-Vermessungen erheblich beeinflussen und müssen mittels aufwändiger Kalibrierverfahren sorgfältig ausgeglichen werden.

Es ist daher Aufgabe der vorliegenden Erfindung, ein optisches Projektionsgitter, eine Messkamera mit optischem Projektionsgitter sowie ein Verfahren zur Erzeugung eines optischen Projektionsgitters bereitzustellen, die die Nachteile der Projektionsgitter aus dem Stand der Technik vermeiden.

Darstellung der Erfindung

Ein erfindungsgemäßes optisches Projektionsgitter zur Erzeugung einer Lichtverteilung weist eine Transmissionsverteilung auf, wobei die Transmissionsverteilung durch Teilbereiche, die in ihrer Art lichtdurchlässige Strukturen und lichtundurchlässige Strukturen enthalten, gebildet ist. Innerhalb eines Teilbereichs sind mehrere Strukturen jeder Art, vorzugsweise im wesentlichen unzusammenhängend und einander abwechselnd, verteilt, wobei das Verhältnis von lichtdurchlässigen Strukturen zu lichtundurchlässigen Strukturen innerhalb eines Teilbereichs so gewählt ist, dass ein dem Teilbereich zugeordneter Transmissionswert zumindest in einem statistischen Mittel erreicht wird.

Durch die Auflösung der aus dem Stand der Technik bekannten nebeneinanderliegenden Blockstrukturen in unzusammenhängend und abwechselnde Strukturen der lichtundurchlässigen und lichtdurchlässigen Art lässt sich zum einen die Breite der Teilbereiche in Laufrichtung des Gitters verringern.

Unter einem statistischen Mittelwert wird ein Wert verstanden, der anders als ein konstanter Wert einer Wahrscheinlichkeitsverteilung folgend erreicht wird. So kann ein konstanter Mittelwert 0,8 betragen, der statistische Mittelwert kann 0,75 oder 0,81 oder auch andere Werte annehmen. Die Erfindung kann sowohl mit einem konstanten als auch mit einem statistisch verteilten Mittelwert als Transmissionswert eines Teilbereichs ausgeführt werden.

Vorteilhafterweise können die lichtdurchlässigen Strukturen und die lichtundurchlässigen Strukturen innerhalb des Teilbereichs entsprechend einer Zufallsverteilung verteilt sein. Dadurch lässt sich eine Periodizität der Strukturen vermeiden.

Vorteilhafterweise können die Teilbereiche Streifen oder Rechtecke sein. Der Unterschied von Streifen und Rechtecken besteht lediglich in deren Breite in Laufrichtung des Gitters, wobei Streifen schmaler sind als Rechtecke. Diese Streifen oder Rechtecke erstrecken sich aus Gründen des angewandten Messprinzips vorzugsweise senkrecht zur Laufrichtung des Gitters.

Vorteilhafterweise können die Strukturen Pixel aufweisen. Durch eine Auflösung der Strukturen in messtechnisch erfassbare und herstellungstechnisch bedingte kleinste Einheiten, bezeichnet als Pixel, kann eine vielfältige Gestaltungsmöglichkeit der Teilbereiche erreicht werden, wodurch sich die Ausbildung von periodisch wiederkehrenden Teilbereichen verringern oder sogar verhindern lässt.

Vorteilhafterweise kann die Transmissionsverteilung des Projektionsgitters in einer Laufrichtung des Gitters periodisch sein.

Vorteilhafterweise kann die Transmissionsverteilung in einer Laufrichtung des Gitters einer Sinusverteilung entsprechen. Dadurch lassen sich aus dem Stand der Technik bekannte Messverfahren ohne weiters bei erhöhter Genauigkeit anwenden.

Vorteilhafterweise kann die Transmissionsverteilung in einer Laufrichtung einer periodischen Folge von Gaußkurven entsprechen. Aufgrund der möglichen verringerten Breite eines Teilbereichs können beliebige andere Verteilungen bereitgestellt werden. Als geeignet haben sich periodische Folgen von Gauß-Kurven, also der Glockenverteilung, herausgestellt.

Vorteilhafterweise kann die Zufallsverteilung der Strukturen innerhalb eines Teilbereichs einer Poissonverteilung, einer Normalverteilung oder einer Gaußverteilung folgen. Dies bedeutet, dass die Verteilung der sich abwechselnden unzusammenhängenden Strukturen nicht regelmäßig ist, sondern einer Zufallsverteilung der genannten Art folgt. Insbesondere bei einer Auflösung der Strukturen in Pixel kann die Lichtdurchlässigkeit einzelner Pixel gezielt einer derartigen Verteilung folgen.

Vorteilhafterweise kann das Projektionsgitter aus mehreren Kacheln aufgebaut sein, wobei innerhalb jeder Kachel eine erfindungsgemäße Intensitätsverteilung vorliegt und jede Kachel einer vollständigen Gitterperiode oder einem Vielfachen davon entspricht. Dadurch ergibt sich zwar eine Periodizität durch aufeinanderfolgende gleiche Kacheln. Gleichwohl ergibt sich eine Verbesserung, da innerhalb einer Kachel eine Periodizität vermieden wird.

Vorteilhafterweise können die Strukturen auf einer transparenten Platte gedruckt, geätzt, belichtet oder mittels dem Elektronenstrahlverfahren hergestellt sein.

Vorteilhafterweise kann das Projektionsgitter zwischen 5 x 5 mm und 30 x 30 mm groß sein und die Projektionsgitterkonstante kann zwischen 7 * 1/cm und 20 * 1/cm liegen.

Die Abmessungen und die Projektionsgitterkonstante des Projektionsgitters in diesem Wertebereich ist besonders vorteilhaft für eine Messkamera zur Vermessung von Zähnen.

Vorteilhafterweise kann die Breite der Teilbereiche in Laufrichtung des Gitters zwischen 1 $\mu$m und 5 $\mu$m betragen. Dadurch lassen sich hinreichend fein aufgelöste Helligkeitsverteilungen wie etwa eine Sinusform oder eine Glockenkurve nachbilden.

Vorteilhafterweise kann die Wellenlänge eines Beleuchtungslichts zwischen 400 nm und 900 nm betragen.

Ein weiterer Gegenstand der Erfindung ist eine Messkamera zur intraoralen Vermessung, die eine Lichtquelle, eine Abbildungsoptik mit einem bewegbaren Projektionsgitter im Beleuchtungsstrahlengang und mit einem Bildaufnehmer im Beobachtungsstrahlengang aufweist. Durch ein erfindungsgemäßes vorstehend beschriebenes Projektionsgitter ist die Genauigkeit verbessert.

Vorteilhafterweise kann eine Auswerteeinheit vorgesehen sein, die unter Berücksichtigung der bekannten Zufallsverteilung des Projektionsgitters kalibriert ist. Für eine genaue Kalibrierung der Auswerteeinheit ist die Kenntnis der tatsächlichen Verteilung des Projektionsgitters von wesentlicher Bedeutung. In der eigentlichen Messungen spielt die Verteilung hingegen keine Rolle.

Ein weiterer Gegenstand der Erfindung ist ein Verfahren zur Erzeugung eines optischen Projektionsgitters, wobei das Projektionsgitter eine Transmissionsverteilung aufweist. Dabei wird eine Transmissionsverteilung des Projektionsgitters ausgewählt oder berechnet, die Transmissionsverteilung in Teilbereiche mit einem Transmissionswert aufgeteilt und die Teilbereiche werden mit lichtdurchlässigen Strukturen und lichtundurchlässigen Strukturen versehen, wobei die lichtdurchlässigen Strukturen und die lichtundurchlässigen Strukturen innerhalb des Teilbereichs entsprechend einer Zufallsverteilung verteilt sind.

Vorteilhafterweise kann eine stetige Transmissionsverteilung, etwa eine Sinusfunktion, in eine diskrete Transmissionsverteilung umgewandelt werden, die besonders fein aufgelöst sein kann. Dabei können Teilbereiche mit höchstens 1/10 der Breite der Gitterperioden vorgesehen werden.

Vorteilhafterweise kann das Verhältnis von lichtdurchlässigen Strukturen zu lichtundurchlässigen Strukturen innerhalb eines Teilbereichs so gewählt werden, dass der dem Teilbereich zugeordnete Transmissionswert erreicht wird.

Vorteilhafterweise kann die Verteilung der lichtdurchlässigen und lichtundurchlässigen Strukturen mittels eines Zufallszahlengenerators vorgenommen werden.

Vorteilhafterweise kann sich die Verteilung der Strukturen über das ganze Gitter erstrecken, also ohne jede planmäßige Wiederholung. Dadurch wird jede Periodizität vermieden.

Vorteilhafterweise kann eine lichtundurchlässige Struktur erzeugt werden, wenn eine der Struktur zugeordnete Zufallszahl größer als der dem Teilbereich zugeordnete Transmissionswert, gegebenenfalls multipliziert mit einem Faktor, ist. Dadurch ist eine einfache Erzeugung des Musters möglich.

Vorteilhafterweise kann als Transmissionsverteilung eine Sinusverteilung oder eine periodische Folge von Gaußkurven ausgewählt sein.

Kurzbeschreibung der Zeichnungen

Die Erfindung wird anhand der Zeichnungen erläutert. Es zeigen:

Fig. 1A　　　einen Ausschnitt eines erfindungsgemäßen Projektionsgitters;

Fig. 1B　　　ein Detail aus Fig. 1A

Fig. 2A, B　　eine Skizze einer erfindungsgemäßen Messkamera sowie das zugrunde liegende Vermessungsprinzip;

Fig. 3A-D    ein einer Sinusfunktion folgendes (Fig. 3A) Projektionsgitter gemäß dem Stand der Technik in einer Übersichtsaufnahme (Fig. 3B), einer Detailaufnahme (Fig. 3C) und die vorgegebene Helligkeitsverteilung (Fig. 3D);

Fig. 4      ein Zuordnungsprinzip einer erfindungsgemäßen Transmissionsverteilung;

Fig. 5      ein Verteilungsprinzip gemäß einer Zufallsverteilung;

Fig. 6A-C   verschiedene Transmissionsverteilungen;

Fig. 7      eine über zwei Perioden laufende sinusförmige Transmissionsverteilung;

Fig. 8A     eine Übersicht über die Verteilungen aus den Fig. 7, 8B-8D;

Fig. 8B-D   verschiedene Transmissionsverteilungen über jeweils zwei Perioden,

Fig. 9      ein aus mehreren Kacheln aufgebautes Projektionsgitter.

Ausführungsbeispiel der Erfindung

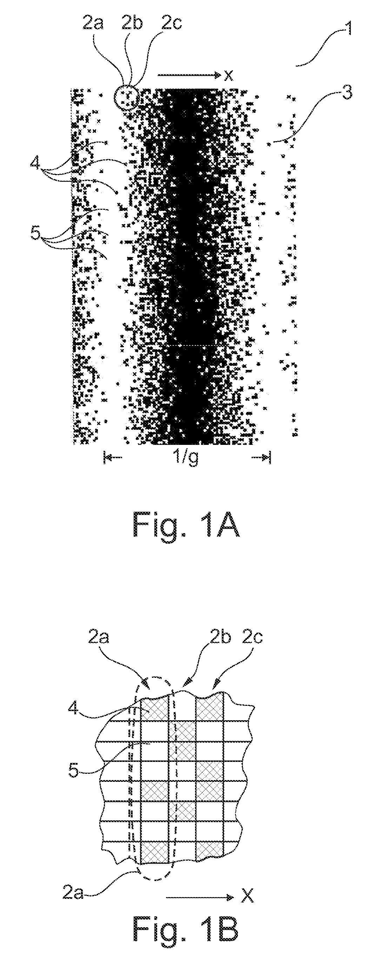

Die **Fig. 1A** zeigt einen Ausschnitt eines erfindungsgemäßen Projektionsgitters 1. Der dargestellte Ausschnitt des Projektionsgitters 1 zeigt einen Bereich von etwas mehr als einer Gitterperiode G = 1/g mit einer bestimmten Transmissionsverteilung in Laufrichtung x des Gitters 1, die hier sinusförmig ist.

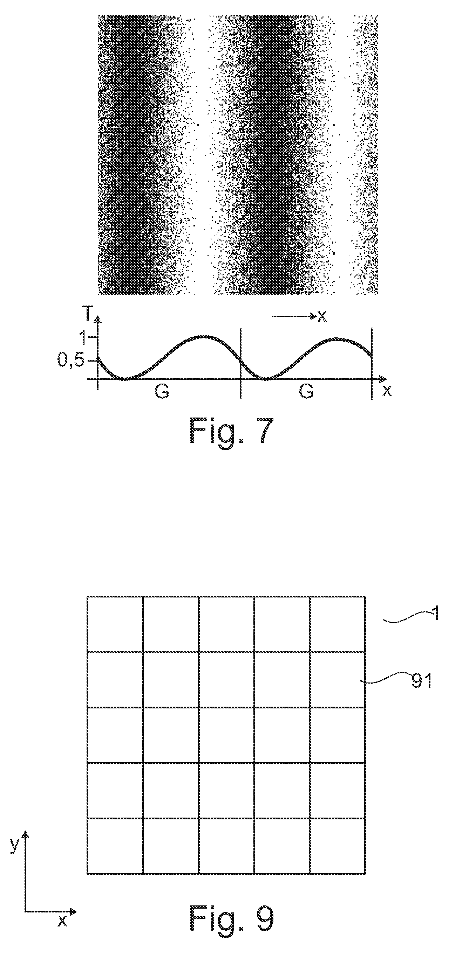

Mittels des gesamthaft in Fig. 9 dargestellten Projektionsgitters 1 wird eine sinusförmige Helligkeitsverteilung auf einem zu vermessenden Objekt erzeugt, auf das durch das Projektionsgitter 1 hindurch Licht gestrahlt wird. Das Projektionsgitter 1 ist dazu innerhalb eines Bereichs im Strahlengang platziert, in dem das Beleuchtungslicht aufgeweitet und im Wesentlichen parallel ist. In einer derartigen Konfiguration ist die zu der gewünschten Lichtverteilung zugehörige Transmissionsverteilung auf dem Projektionsgitter 1 ebenfalls sinusförmig.

Die Transmissionsverteilung ist in Teilbereiche 2a, 2b ... 2i aufgeteilt, wobei jeder Teilbereich eine nach den Prinzipien der Streifenprojektion messtechnisch auswertbare Einheit darstellt. Ein Teilbereich besteht gemäß der in Fig. 1B dargestellten Transmissionsverteilung aus einem senkrecht zur Laufrichtung x des Gitters 1 verlaufenden Streifen von einem Pixel Breite. Die Teilbereiche 2a, 2b ... 2i enthalten lichtundurchlässige Strukturen 4 und lichtdurchlässige Strukturen 5. Die Strukturen 4, 5 sind in der dargestellten Ausführungsform sowohl einzelne Pixel als auch Gruppen von zusammenhängenden Pixeln. Unter einem Pixel wird hier die kleinste Einheit innerhalb eines Teilbereichs verstanden, die die Eigenschaft lichtdurchlässig oder lichtundurchlässig aufweist.

Innerhalb eines Teilbereichs 2a, 2b ... 2i ist das Verhältnis von lichtdurchlässigen Pixeln 5 zu lichtundurchlässigen Pixeln 4 so gewählt, dass ein dem Teilbereich zugeordneter Transmissionswert $T_a$ zumindest als statistisch verteilter Mittelwert erreicht wird.

Der Transmissionswert T ist definiert als das Verhältnis der transmittierten Lichtintensität I zu der eingestrahlten Lichtintensität $I_0$. Demnach entspricht der Transmissionswert dem Verhältnis der Anzahl lichtdurchlässiger Strukturen $N_T$ zur Gesamtanzahl der Strukturen $N_T + N_0$.

Für das Verhältnis der Anzahl lichtundurchlässiger Strukturen $N_O$ zur Anzahl lichtdurchlässiger Strukturen $N_T$ gilt somit:

$$T = \frac{N_T}{N_T + N_0}$$

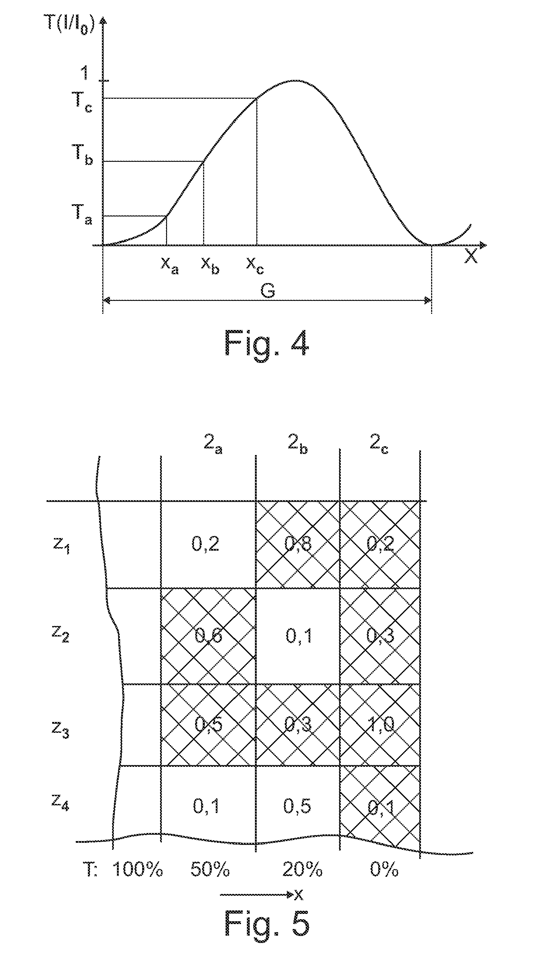

Innerhalb eines Teilbereichs 2a, 2b ... 2i sind die lichtundurchlässigen Pixel 4 und die lichtdurchlässigen Pixel 5 gemäß einer Zufallsverteilung verteilt, wobei die Größe der aus einem oder mehreren Pixeln bestehenden Strukturen unterschiedlich ist. Das Verteilungsprinzip wird in den Fig. 4 und 5 eingehender erläutert.

Jeder Teilbereich 2a, 2b ... 2i, der mittels der Zufallsverteilung erzeugt wird, ist durch die Zufallsverteilung einzigartig, zumindest innerhalb einer Gitterperiode G. Es ist vorteilhaft, wenn die Zufallsverteilung der Teilbereiche über mindestens zwei Gitterperioden G verläuft. Damit wird vermieden, dass Beugungsmuster auf dem zu vermessenden Bereich durch sich regelmäßig wiederholende Strukturen entstehen, die die Vermessung negativ beeinflussen.

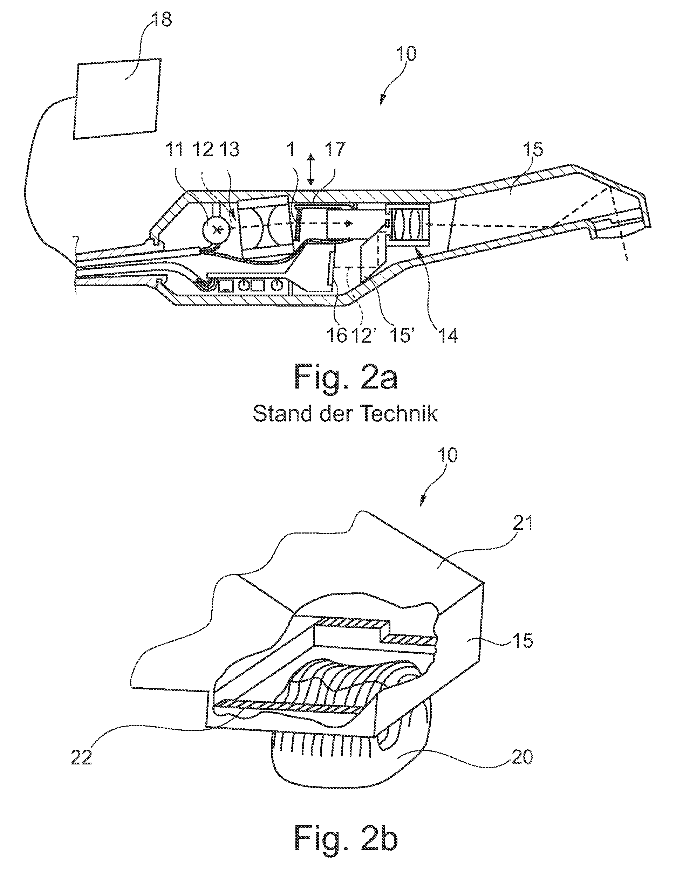

**Fig. 2A** zeigt eine Skizze einer Messkamera und **Fig. 2B** einen Ausschnitt der Kamera zur Verdeutlichung des zugrunde liegenden Vermessungsprinzips zur dreidimensionalen Vermessung von Oberflächen, wie sie im Prinzip aus dem Stand der Technik bekannt sind.

Das erfindungsgemäße Projektionsgitter 1 kann in verschiedenen bekannten Vermessungsprinzipien eingesetzt werden, z.B. der Phasenshift-Triangulation.

Die Fig. 2A zeigt eine Prinzipskizze der Messkamera 10, die nach dem Prinzip der Phasenshift-Triangulation arbeitet.

Die Messkamera 10 dient zur Vermessung von dreidimensionalen Objekten wie z.B. Zähnen. Ein zu vermessendes Objekt ist nicht dargestellt.

Die Messkamera 10 weist Beleuchtungsmittel 11 auf, von denen aus ein Strahl 12 in gestrichelten Linien dargestellt ist. Der Strahl 12 wird mittels der Linsenanordnung 13 aufgeweitet und durch das erfindungsgemäße Projektionsgitter 1 gestrahlt. Das nach dem Durchgang durch das Projektionsgitter 1 strukturierte Licht wird durch die bildformende Linsenanordnung 14 gestrahlt und mittels eines Prismas 15 auf das zu vermessende Objekt 20 (Fig. 2B) gelenkt.

Nach der Reflexion von dem zu vermessenden Objekt wird ein Beobachtungsstrahl 12' der in einem Winkel zu dem Beleuchtungsstrahl 12 steht, wieder in das Prisma 15 ein und wird durch den unteren Teil der bildformenden Linsenanordnung 14 geleitet. Das Umlenkprisma 15' lenkt den Beobachtungsstrahl 12' auf einen Bildempfänger 16.

Das Projektionsgitter 1 ist an einer beweglichen Halterung 17 befestigt. Die bewegliche Halterung 17 dient zum Verschieben des Projektionsgitters im wesentlichen transversal zur Richtung des Strahls 12. Damit wird eine Phasenverschiebung ermöglicht.

In einer Auswerteeinheit 18 wird ein Bild erzeugt, wobei Kalibrierdaten der Kamera berücksichtigt werden.

**Fig. 2B** zeigt das Vermessungsprinzip der Messkamera 10 anhand eines Zahnes 20. Dazu ist Kopfbereich 21 der Messkamera 10 mit dem Prisma 15 aufgeschnitten dargestellt. Das Beleuchtungslicht erzeugt nach dem Durchgang durch das Projektionsgitter 1 eine sinusförmige Helligkeitsverteilung, die nach dem Durchgang durch das Prisma 15 unter einem kleinen Winkel zum Beobachtungsstrahlengang auf den Zahn 20 projiziert wird und dort eine sinusförmige Helligkeitsverteilung erzeugt, die zur Vereinfachung durch Streifen dargestellt ist. Bei der Beobachtung der Reflexion unter einem kleinen Winkel bewirkt das Höhenprofil des Zahnes 20 eine Verformung des Streifenmusters 22, die mittels des Bildempfängers 16 erfasst wird. Aus dem erfassten verformten Streifenmuster lässt sich das Oberflächenprofil des zu vermessenden Zahnes 20 ableiten.

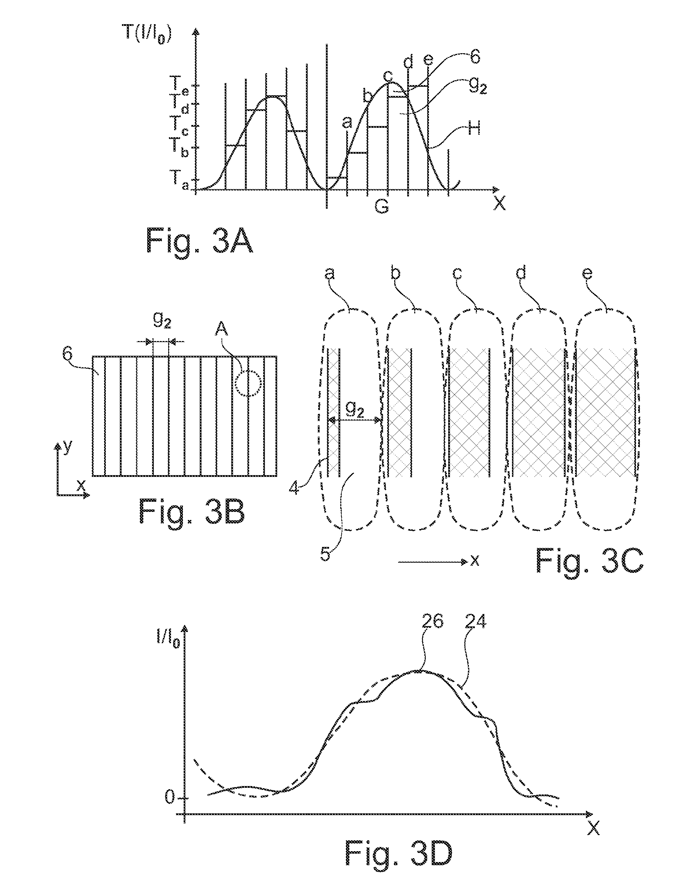

Die **Fig. 3A - 3D** zeigen den bisherigen Stand der Technik mit einer vorgegebenen Helligkeitsverteilung, einem Projektionsgitter in einer Übersichtsaufnahme sowie in einer Detailaufnahme.

Fig. 3A zeigt eine vorgegebene Helligkeitsverteilung H, die mit dem Projektionsgitter mit einem Gitterabstand G auf dem zu vermessenden Objekt erzeugt werden soll. Auf der x-Achse ist der Verlauf in x-Richtung dargestellt, auf der y-Achse die Transmission T als Intensität I bezogen auf die Intensität $I_0$ des Beleuchtungslichtes. Der dargestellte Verlauf ist in Richtung der y-Achse im wesentlichen sinusförmig.

Zur Bestimmung einer diskreten Transmissionsverteilung wird eine Periode der vorgegebenen Transmissionsverteilung aus Fig. 3A in gleich breite Abschnitte 6a, b, c, d, e mit einer Breite $g_2$ aufgeteilt und die zu dem jeweiligen Abschnitt diskrete Transmission $T_a$, $T_b$, $T_c$, $T_d$, $T_e$ durch Bildung eines Mittelwert der vorgegebenen Transmissionsverteilung in dem jeweiligen Abschnitt a, b, c, d, e bestimmt.

Fig. 3B zeigt schematisch ein Projektionsgitter gemäß dem Stand der Technik zur Erzeugung der Helligkeitsverteilung aus Fig. 3A. Der vorgegebene Transmissionsverlauf wird durch ein Streifenmuster nachgebildet, das im Detail in Fig. 3c dargestellt ist. Das Projektionsgitter weist in y-Richtung verlaufende durchgehende Abschnitte 6 auf. Die Abschnitte 6 sind äquidistant mit einer Konstante $g_2$.

Die Fig. 3C zeigt den Ausschnitt A aus Fig. 3B in einer Vergrößerung. Die in Fig. 3A dargestellte vorgegebene Transmissionsverteilung wird mittels lichtdurchlässiger und lichtundurchlässiger Streifen nachgebildet.

Den Abschnitten a, b, c, d, e aus Fig. 3A entsprechen gleich breite Abschnitte auf dem Projektionsgitter mit einer Breite $g_2$, welche anschließend je in zwei Streifen 4,5 aufgeteilt werden, nämlich in einen lichtdurchlässigen Streifen 5 und in einen lichtundurchlässigen Streifen 4. Das Verhältnis der Breite von lichtundurchlässigen zu lichtdurchlässigen Streifen 4,5 in Richtung x des Gitters ist dabei so gewählt, dass die in dem jeweiligen Abschnitt 6a, 6b, 6c, 6d, 6e erforderliche diskrete Transmission $T_a$, $T_b$, $T_c$, $T_d$, $T_e$ erreicht wird.

Bei periodischen Transmissionsverteilungen, wie bei der dreidimensionalen Vermessung üblich, führt das oben geschilderte Verfahren dazu, dass auf dem Projektionsgitter ein sich periodisch wiederholendes Streifenmuster entsteht.

Ein derart regelmäßiges Streifenmuster hat den Nachteil, dass Beugungsmuster auf dem zu vermessenden Objekt erzeugt werden, die sich mit der vorgegebenen Helligkeitsverteilung überlagern. Ein weiterer Nachteil ist, dass die Abschnitte wesentlich breiter sein müssen, als es das Auflösungsvermögen der verwendeten Herstellungstechnologie erlaubt, da nur so die vorgegebene Transmission eines Abschnitts 6 hinreichend exakt nachgebildet werden kann. Die Mindestbreite eines Abschnitts 6 auf dem Projektionsgitter beträgt etwa 20 Pixel.

Ein gemessenes Ergebnis einer derartigen Überlagerung ist in Fig. 3D dargestellt. Neben der gestrichelt dargestellten vorgegebenen Helligkeitsverteilung 24 ist eine reale Helligkeitsverteilung 26 dargestellt. Die reale Helligkeitsverteilung 26 weicht von der vorgegebenen Helligkeitsverteilung 24 deutlich erkennbar ab. Dies ist einerseits auf die Aufteilung der kontinuierlichen Helligkeitsverteilung in eine diskrete Helligkeitsverteilung und andererseits auf die Beugungseffekte zurückzuführen. Die Abweichungen des

Ist-Zustandes vom Soll-Zustand führen zu einer verminderten Messgenauigkeit und gegebenenfalls sogar zu Messfehlern, da die Auswertung ein erzeugtes Bild falsch interpretiert.

**Fig. 4** zeigt das Zuordnungsprinzip der Transmissionsverteilung gemäß der Erfindung.

Im in Fig. 4 dargestellten Fall soll wie in Fig. 3A in X-Richtung eine sinusförmige Transmissionsverteilung erreicht werden. Die Orte $X_A$, $X_B$ und $X_C$ korrespondieren mit Teilbereichen der Transmissionsverteilung, die auf das Projektionsgitter aufgebracht wird. Jedem dieser Orte $X_A$, $X_B$ und $X_C$ ist über die vorgegebene Transmissionsverteilung eine bestimmte Transmission $T_A$, $T_B$ sowie $T_C$ zugeordnet.

Der Unterschied gegenüber dem bekannten Verfahren ist, dass die Abstände zwischen zwei derartigen Koordinaten wesentlich geringer sein können als bisher möglich. Dies wird dadurch erreicht, dass innerhalb eines Teilbereichs auch bei einer Teilbereichsbreite von nur einem Pixel die gewünschte Transmission eingestellt werden kann. Dies kam zu einer Auflösungsverbesserung gegenüber dem Stand der Technik um etwa den Faktor 20 führen.

Die **Fig. 5** zeigt das Verteilungsprinzip der lichtdurchlässigen und der lichtundurchlässigen Strukturen auf dem Projektionsgitter. 2a, 2b und 2c.

Dem Teilbereich 2a ist eine Transmission von 50%, dem Teilbereich 2b eine Transmission von 20% und dem Teilbereich 2c eine Transmission von 0% zugeordnet. Die großen Sprünge zwischen den Werten der Transmission der benachbarten Teilbereiche 2a, 2b, 2c sind nur beispielhaft, in einer tatsächlichen Ausführungsform ist die Abstufung zwischen den benachbarten Teilbereichen wesentlich kleiner.

Mittels eines Zufallsgenerators werden Zufallszahlen, beispielsweise zwischen 0 und 1 erzeugt. Die Verteilung der Zufallszahlen kann dabei einer Poissonverteilung entsprechen. In der Richtung senkrecht zur Laufrichtung x wird durch eine von den Zufallszahlen abhängige Anordnung von lichtundurchlässigen und lichtdurchlässigen Strukturen der für den Teilbereich geforderte Wert der Transmission eingestellt. Die Zufallsverteilung erfolgt über jeden einzelnen

Teilbereich, wobei auch eine Verteilung über das ganze Gitter denkbar ist.

Bei einer Verteilung über das ganze Gitter ist eine homogenere Zufallsverteilung als bei einer Verteilung nur innerhalb eines Teilbereiches gewährleistet.

Da die Transmission, ebenso wie die Zufallszahlen, einheitenlose Werte zwischen 0 und 1 annehmen kann, kann eine direkte Zuordnung von Zufallszahlen zu Transmission vorgenommen werden. Bei anderen Skalen kann eine Anpassung der beiden Skalen aneinander erforderlich sein.

Eine lichtundurchlässige Struktur wird beispielsweise dann erzeugt, wenn die Zufallszahl größer oder gleich der Transmission T des Teilbereiches 2a-2c ist. Ist beispielsweise dem Teilbereich 2a, Zeile Z2, der Zufallswert 0,6 zugeordnet, wird die entsprechende Struktur lichtundurchlässig ausgebildet, weil der Zufallswert 0,6 größer ist als die Transmission des Teilbereichs 2a von 50% bzw. 0,5. In dem gleichen Teilbereich 2a ist in Zeile Z1 der Wert 0,2 zugeordnet, deshalb ist dieses Pixel lichtdurchlässig. Der Verteilung der Strukturen innerhalb jedes Teilbereichs 2a-2c erfordert eine Transformation der Zufallszahlen so, dass diese zumindest als statistisch verteilter Mittelwert die geforderte Transmission ergeben, also etwa 50% für den Teilbereich 2a.

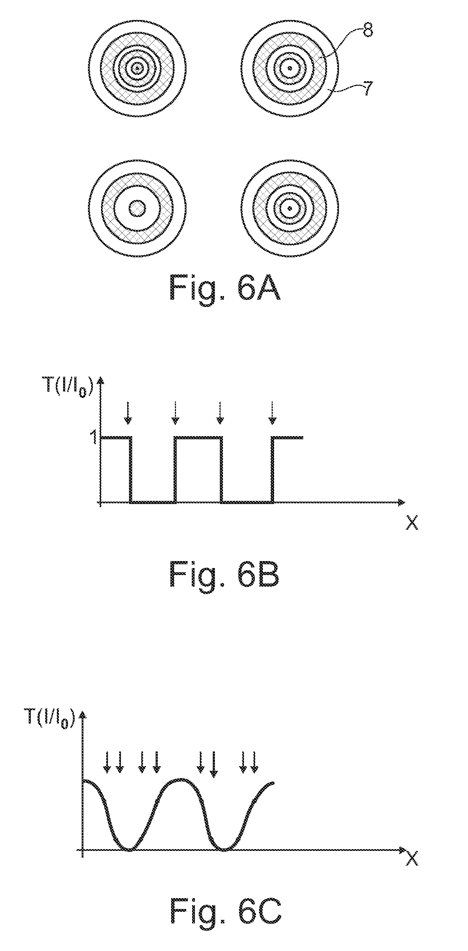

Weitere mögliche Zufallsverteilungen für die Zufallszahlen können eine Normalverteilung oder eine Gaußverteilung sein. Die **Fig. 6A** bis **6C** zeigen verschiedene weitere mögliche Transmissionsverteilungen.

Die Fig. 6A zeigt beispielsweise eine Helligkeitsverteilung, bei der gaußförmige Helligkeitsprofile 7 in regelmäßigen Abständen zweidimensional über das Gitter verteilt sind. Die Gaußverteilungen 7 können, wie dargestellt, in der Ebene des Projektionsgitters radialsymmetrisch sein. Teilbereiche 8 gleicher Transmission sind dann rund. Gaußförmige Transmissionsverteilungen besitzen den Vorteil, dass die Fouriertransformation ebenfalls gaußförmig ist. Eine gaußförmige Helligkeitsverteilung besitzt daher gute Abbildungseigenschaften. Daher ist ein derartiges Projektionsgitter vielfältiger innerhalb der Messkamera einsetzbar.

Fig. 6B zeigt eine rechteckförmige Transmissionsverteilung in x-Richtung sowie in die Zeichenebene hinein eine konstante Helligkeitsverteilung. Eine rechteckförmige Helligkeitsverteilung ermöglicht die Aufnahme eines Messpunktes an jeder Flanke, dargestellt durch Pfeile. Rechteckförmige Transmissionsverteilungen haben jedoch den Nachteil, dass besonders starke Beugungsmuster entstehen, da die Transmissionsverteilung besonders regelmäßig ist.

Fig. 6C zeigt die bevorzugte sinusförmige Helligkeitsverteilung, bei der eine Vermessung an je zwei Punkten der aufsteigenden und der absteigenden Flanken möglich ist.

Mittels sinusförmiger Helligkeitsverteilung kann die Auflösung daher gegenüber der Verteilung aus 6B verdoppelt werden. Sinusförmige Helligkeitsverteilungen sind daher besonders gut zur dreidimensionalen Messung geeignet.

In Fig. 7 ist ein Ausschnitt aus einem Projektionsgitter mit einer sinusförmigen Helligkeitsverteilung gezeigt, der über zwei Gitterperioden G geht. Die dunklen Stellen sind lichtundurchlässige Strukturen, die hellen Bereiche sind luchdurchlässig. In Laufrichtung des Gitters gesehen starten die Transmission einer Periode bei einem Wert von 0,5, sinkt ab auf 0, steigt an auf 1 und sinkt wieder ab auf 0,5.

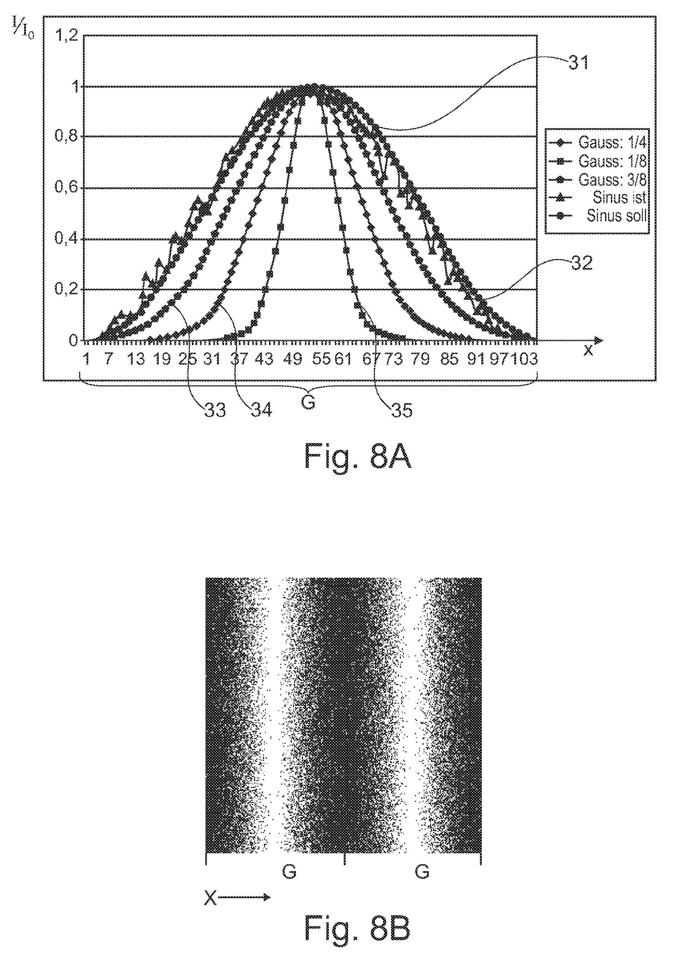

In Fig. 8A sind verschiedene Transmissionsverläufe dargestellt. Die äußerste Kurve 31 entspricht einem theoretischen Sinusverlauf. Die unmittelbar benachbarte Kurve 32 ist der tatsächliche Verlauf bei einem erfindungsgemäß gestalteten Projektionsgitter mit einer Zufallsverteilung für einen sinusförmigen Verlauf. Die drei weiter innen verlaufenden Kurven 23-25 entsprechen in ihrem Verlauf einer Gaußkurve, auch als Glockenkurve bekannt, mit jeweils schmaler werdender Breite.

In Fig. 8B-8D sind verschiedene Verläufe der Transmission bzw. der dazugehörigen Gitter dargestellt. In Fig. 8B entspricht der Transmissionsverlauf einer Gaußkurve mit einer 3/8-Verteilung, wobei wieder zwei Perioden dargestellt sind. In Laufrichtung x gesehen wird von einem Wert 0 ausgegangen bis zu einem Maximalwert 1, dargestellt durch den hellen Streifen und die Transmission nimmt dann wieder auf den Wert 0 ab. Dies wiederholt sich auch über die zweite Periode.

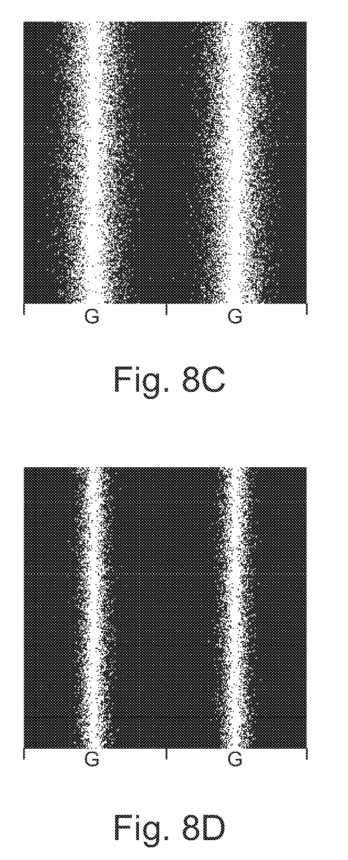

Auch in den Fig. 8C, 8D ist dieser Aufbau dem Grunde nach beibehalten, wobei jedoch die Breite des hellen Bereichs in Fig. 8C kleiner ist als in Fig. 8B und in Fig. 8D wiederum kleiner als in Fig. 8C.

In Fig. 9 ist ein aus mehreren Kacheln 91 aufgebautes Projektionsgitter 1 dargestellt. Jede Kachel weist eine sich über mindestens zwei Gitterperioden erstreckende Transmissionsverteilung auf, wobei die mehreren Kacheln an sich identisch ausgebildet sind.

Die Aufteilung des Projektionsgitters in sich wiederholende Bereiche hat den Vorteil, das bestehende Herstellungsverfahren für das Gitter auch bei der bislang eingesetzten Herstellungstechnologie des Aneinandersetzens von Strukturen beim Herstellungsprozess des Gitters Verwendung finden kann. Hierzu wird bislang ein Beleuchtungsgerät mit einer eng begrenzten Speicherkapazität für das Muster des herzustellenden Gitters verwendet.

Es hat sich aber gezeigt, dass die Aufteilung in Kacheln trotz einer noch vorhandenen Periodizität eine Verbesserung gegenüber einer reinen herkömmlichen Streifenprojektion zur Folge hat.

## Bezugszeichenliste

| | |
|---|---|
| 1 | Projektionsgitter |
| 2a-2i | Teilbereiche |
| 3 | Transmissionsverteilung |
| 4 | lichtundurchlässige Strukturen |
| 5 | lichtdurchlässige Strukturen |
| 10 | Messkamera |
| 11 | Beleuchtungslicht |
| 12 | Strahlengang |
| 12' | reflektierter Strahl |
| 13 | Linsenanordnung |
| 14 | bildformende Linsenanordnung |
| 15 | Prisma |
| 15' | Umlenkprisma |
| 16 | Bildempfänger |
| 17 | bewegliche Halterung |
| 18 | Auswerteinheit |
| 20 | Zahn |
| 21 | Kopfbereich der Messkamera |
| 22 | sinusförmig strukturiertes Beleuchtungslicht |
| 24 | vorgegebene Helligkeitsverteilung |
| 26 | reale Helligkeitsverteilung |
| 31 | Sinuskurvenverteilung theoretisch |
| 32 | Sinuskurvenverteilung tatsächlich |
| 33 | Gauskurvenverteilung |
| 34 | Gauskurvenverteilung |
| 35 | Gauskurvenverteilung |
| a,b,c,d, e | Teilbereiche |
| G | Gitterabstand |
| g | Gitterkonstante |
| $g_2$ | Gitterkonstante |
| I | Intensität |
| $I_0$ | eingestrahlte Lichtintensität |
| T | Transmission |
| $T_a$-$T_i$ | Transmission eines Teilbereichs a - i |
| x | Laufrichtung des Gitters |
| $Z_1$-$Z_3$ | Zeile 1-3 |

## Patentansprüche

1.  Optisches Projektionsgitter (1) zur Erzeugung einer Lichtverteilung, wobei das Projektionsgitter (1) eine Transmissionsverteilung aufweist, wobei die Transmissionsverteilung durch Teilbereiche (2a, 2b, ... 2i), die lichtdurchlässige Strukturen (5) und lichtundurchlässige Strukturen (4) enthalten, gebildet ist, **dadurch gekennzeichnet, dass** innerhalb eines Teilbereichs (2a, 2b, 2c, 2d, 2e, 2f, 2g, 2h, 2i) mehrere Strukturen jeder Art verteilt sind, wobei das Verhältnis von lichtdurchlässigen Strukturen (5) zu lichtundurchlässigen Strukturen (4) innerhalb eines Teilbereichs (2a, 2b, ... 2i) so gewählt ist, dass ein dem Teilbereich (2a, 2b, ... 2i) zugeordneter Transmissionswert ($T_a$, $T_b$, ... $T_i$) zumindest in einem statistischen Mittel erreicht wird.

2.  Optisches Projektionsgitter (1) nach Anspruch 1, **dadurch gekennzeichnet, dass** die lichtdurchlässigen Strukturen (5) und die lichtundurchlässigen Strukturen (4) innerhalb des Teilbereichs (2a, 2b, ... 2i) entsprechend einer Zufallsverteilung verteilt sind.

3.  Optisches Projektionsgitter (1) nach Anspruch 1 oder 2, **dadurch gekennzeichnet, dass** die Teilbereiche (2a, 2b, ... 2i) Streifen oder Rechtecke sind.

4.  Optisches Projektionsgitter (1) nach einem der Ansprüche 1 bis 3, **dadurch gekennzeichnet, dass** die Strukturen (4, 5) Pixel aufweisen.

5.  Optisches Projektionsgitter (1) nach einem der Ansprüche 1 bis 3, **dadurch gekennzeichnet, dass** die Transmissionsverteilung des Projektionsgitters in einer Laufrichtung (x) periodisch ist und insbesondere einer Sinusverteilung oder einer periodischen Folge von Gauß-kurven entspricht.

6.  Optisches Projektionsgitter (1) nach einem der Ansprüche 2 bis 7, **dadurch gekennzeichnet, dass** die Zufallsverteilung eine Poissonverteilung, eine Normalverteilung oder eine Gaußverteilung ist.

7.  Optisches Projektionsgitter nach einer der Ansprüche 1 bis 8, **dadurch gekennzeichnet, dass** das Projektionsgitter aus mehreren Kacheln aufgebaut ist, wobei innerhalb jeder Kachel eine Intensitätsverteilung nach Anspruch 1 vorliegt und jede Kachel einer vollständigen Gitterperiode oder einem Vielfachen davon entspricht.

8. Messkamera (10) zur intraoralen Vermessung, umfassend eine Lichtquelle (11), eine Abbildungsoptik (13, 14) mit einem bewegbaren Projektionsgitter (1) im Beleuchtungsstrahlengang (12) und mit einem Bildaufnehmer (16) im Beobachtungsstrahlengang (12'), **dadurch gekennzeichnet, dass** das Projektionsgitter (1) gemäß einem der Ansprüche 1 bis 13 ausgebildet ist.

9. Messkamera (10) nach Anspruch 15, **dadurch gekennzeichnet, dass** eine Auswerteeinheit vorgesehen ist, die unter Berücksichtigung der bekannten Zufallsverteilung des Projektionsgitters (1) kalibriert ist.

10. Verfahren zur Erzeugung eines optischen Projektionsgitters (1), wobei das Projektionsgitter (1) eine Transmissionsverteilung aufweist, **dadurch gekennzeichnet, dass**

   - eine Transmissionsverteilung des Projektionsgitters (1) ausgewählt oder berechnet wird,
   - die Transmissionsverteilung in Teilbereiche (2a, 2b, ... 2i) mit einem Transmissionswert (Ta, Tb, ... Ti) aufgeteilt wird und
   - die Teilbereiche (2a, 2b, ... 2i) mit lichtdurchlässigen Strukturen (5) und lichtundurchlässigen Strukturen (4) versehen werden, wobei die lichtdurchlässigen Strukturen (5) und die lichtundurchlässigen Strukturen (4) innerhalb des Teilbereichs (2a, 2b, ... 2i) entsprechend einer Zufallsverteilung verteilt sind, wobei als Transmissionsverteilung vorzugsweise eine Sinusverteilung oder eine periodische Folge von Gaußkurven ausgewählt ist.

11. Verfahren nach Anspruch 17, **dadurch gekennzeichnet, dass** eine stetige Transmissionsverteilung in eine diskrete Transmissionsverteilung umgewandelt wird.

12. Verfahren nach Anspruch 17 oder 18, **dadurch gekennzeichnet, dass** das Verhältnis von lichtdurchlässigen Strukturen (5) zu lichtundurchlässigen Strukturen (4) innerhalb eines Teilbereichs (2a, 2b, ... 2i) so gewählt wird, dass der dem Teilbereich (2a, 2b, ... 2i) zugeordneter Transmissionswert (Ta, Tb, ... Ti) erreicht wird.

13. Verfahren nach einem der Ansprüche 17 bis 19, **dadurch gekennzeichnet, dass** die Verteilung der lichtdurchlässigen und lichtundurchlässigen Strukturen mittels eines Zufallszahlengenerators vorgenommen wird.

14. Verfahren nach Anspruch 20, **dadurch gekenn-**

**zeichnet, dass** sich die Verteilung der Strukturen (4, 5) über das ganze Gitter erstreckt.

15. Verfahren nach einem der Ansprüche 17 bis 21, **dadurch gekennzeichnet, dass** eine lichtundurchlässige Struktur (4) erzeugt wird, wenn eine der Struktur zugeordnete Zufallszahl größer als der dem Teilbereich (2a, 2b, ... 2i) zugeordnete Transmissionswert (Ta, Tb, ... Ti), gegebenenfalls multipliziert mit einem Faktor, ist.

Fig. 1A

Fig. 1B

Fig. 2a

Stand der Technik

Fig. 2b

Fig. 3A

Fig. 3B

Fig. 3C

Fig. 3D

Fig. 4

Fig. 5

Fig. 6A

Fig. 6B

Fig. 6C

Fig. 7

Fig. 9

Fig. 8A

Fig. 8B

Fig. 8C

Fig. 8D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4436500 A1